# EUROPÄISCHE PATENTANMELDUNG

(11) **EP 2 200 396 A1**
(43) Veröffentlichungstag der Anmeldung: **23.06.2010**
(21) Anmeldenummer: 08172345.4
(22) Anmeldetag: 19.12.2008
(51) Int. Cl.: H05B 3/36, E01C 11/26, F24D 13/02

(54) **Elektrische Flächenheizung**

(71) Anmelder: Sika Technology AG, 6340 Baar (CH)
(72) Erfinder: Zilg, Carsten, 70825 Korntal-Münchingen (DE); Schneider, Horst, 72587 Römerstein (DE)
(74) Vertreter: Sika Patent Attorneys

(57) **Zusammenfassung**

Die Erfindung betrifft den Aufbau einer Flächenheizung aufweisend mindestens eine isolierte Heizschicht (A) bestehend aus einer Isolierschicht (3), in die eine Heizschicht (4, 5, 6, 7) eingebettet ist; randseitig angeordnete elektrische Leiter (4) zur Stromversorgung, wobei die Heizschicht aus einer elektrisch leitfähigen Faser/Kunstharz-Kombination (7) besteht und die elektrischen Leiter (4) je nach Ausführung entweder mittels eines hoch leitfähigen Klebstoffs (6) oder aber über eine mittels geeigneter Kurzfasern erzielte entsprechende Eigenleitfähigkeit des Kunstharzes selbst elektrisch leitend mit dem leitenden Bestandteil der Faser/Kunstharz-Kombination (7) verbunden sind.

## Beschreibung

### Technisches Gebiet

Die Erfindung betrifft den Aufbau einer elektrischen Flächenheizung zur Erwärmung von Flächen in Räumen, insbesondere von Boden und Wänden, von Freiflächen und vereisungsgefährdeten Objekten.

Zweck der Erfindung ist die einfache zusätzliche Ausstattung von Flächen mit einem beheizbaren Beschichtungssystem im Zuge des Neubaus oder zur Renovierung, wie z.B. für die Umnutzung von vormals unbeheizten Lager- zu Produktions-, Werk- oder anderen Arbeitsstätten. Ebenso stehen der präventive Schutz vor Enteisung und auch die nachträgliche Enteisung von befahrenen und begangenen Rampen und Brücken, von Windkrafträdern, Wasserabflussrinnen (z.B. Regenrinnen) oder anderen vereisungsgefährdeten Objekten im Zentrum des Interesses.

### Stand der Technik

Gemäß dem Stand der Technik erfolgt die elektrische Beheizung von Flächen mittels stromdurchflossener metallischer Leiterstränge (Heizleiter), die in Schleifen entweder auf Betonstahl- oder Estrichmatten befestigt werden oder als vorkonfektionierte Ware bereits verlegefertig auf Matten aufgebracht sind. Letztere werden schwimmend verlegt.

Der Nachteil dieser Ausführungsform liegt einerseits, insbesondere bei nachträglichem Einbau, in ihrer aufwändigen Installation und der relativ großen Einbauhöhe von wesentlich mehr als 10mm, andererseits führt hier eine Beschädigung des Heizleiters zu einem vollständigen Versagen der Heizung und das Aufspüren von Fehlerquellen gestaltet sich als sehr schwierig.

Eine weitere bekannte Möglichkeit ist der Einsatz ebenfalls vorkonfektionierter Folienheizelemente, die sich durch eine geringe Einbauhöhe (ca. 0,5mm) auszeichnen. Hier sind die Heizdrähte üblicherweise eingebettet in Trägerfolien z.B. aus Polyvinlychlorid, Polyester, Polyimid oder Silikon.
Der Nachteil dieser Ausführungsform ist bedingt durch die herstellerseitig vorgegebenen Abmessungen der Heizelemente. Auch hier ist der Einbau nur schwimmend möglich, wobei ein kraftschlüssiger Einbau, d.h. ein vollflächiger Verbund zum Untergrund und zu nachfolgenden Schichten, nur durch eine entsprechende Verklebung realisiert werden kann. Diese Elemente bleiben oftmals der Beheizung textiler Beläge, Matten oder auch unterseitig für Raumdecken vorbehalten.

Für beide Ausführungsformen gleichermaßen nachteilig ist die schwierige und unter Umständen sogar unmögliche Anwendung auf gekrümmten Flächen.

Die Druckschriften WO 91/04447 und WO 2005/115055 beschreiben Flächenheizsysteme basierend auf mit leitfähigen Partikeln gefüllten Kunstharzen. Diese erlauben es kraftschlüssig sowohl mit Grund- als auch Deckbeschichtung verbundene heizbare Strukturen auch in dünneren Schichten auszubilden.

Die WO 91/04447 beschreibt eine Bodenheizung, deren heizbare Schicht im Wesentlichen auf einem Material basiert, wie es in elektronischen Siebdruckanwendungen zum Einsatz kommt. Wie angeführt beinhalten derartige Materialien zur Erreichung ihrer elektrischen Eigenschaften - und auch gemäß den an sie gestellten Anforderungen - leitfähige Partikel hoher Feinheit. Es sind dies vorzugsweise Partikel bestehend aus Graphit, Metallen oder Metalllegierungen.

Die Druckschrift WO 2005/115055 beschreibt eine Widerstandsheizung, insbesondere für Innenräume, basierend auf einem wässrigen Epoxidharz/-härtersystem, dessen leitfähige Partikel gemäß dem in dieser Schrift angeführten Verweis auf das nationale Gebrauchsmuster DE 20 2004 008 114 aus hochleitfähigem Ruß, Graphit und Siliciumcarbid bestehen.

Der Nachteil beider in den vorgenannten Druckschriften bekannten Ausführungsformen liegt einerseits in der durch die Wahl der leitfähigen Partikel beschränkten Füllgrade, welche wie beschrieben bei 50 bzw. 65% liegen, die das praxistaugliche Anwendungsverhalten der Materialien entscheidend ungünstig beeinflussen. Andererseits machen, um die angestrebten Heizleistungen von 100 bis 300 W/m² zu erreichen, die durch die genannte Wahl der Partikel erzielbaren maximalen Leitfähigkeiten der gehärteten Systeme eine Applikation der Materialien in höheren Trocken- (bis 2mm) und damit natürlich auch Nassschichtdicken notwendig. Hierin gründet sich ein weiterer Nachteil. Zum einen ist bekannt, dass Materialien mit derartigen für die Applikation notwendigen Lösemittel- oder Wassergehalten bei der Anwendung in höheren Schichtdicken während des Härtungsvorganges stark zum Schwinden und damit verbunden zur Rissbildung neigen. Zum andern hat sich gezeigt, dass sich mit den gegebenen Zusammensetzungen ihr optimaler spezifischer Widerstand von 80 Ωmm für die lösemittelhaltige bzw. 32 Ωmm für die wässrige Variante nur erreichen lässt, wenn das Material bis zum Erreichen der jeweils benötigten Schichtdicke sukzessive in mehreren dünnen Schichten von maximal 300 µm je Trockenschicht aufgetragen wird, wobei infolge des Trocknungsverhaltens zwischen den Arbeitgängen jedesmal eine Wartezeit von ca. einem Tag eingehalten werden muss. Zwar hat diese Art der Vorgehensweise einen positiven Einfluss auf das Schwundverhalten der Beschichtung, jedoch ist sie aufgrund des hohen zeitlichen Aufwandes insbesondere bei höheren notwendigen Endschichtdicken wenig praxistauglich.

### Darstellung der Erfindung

Es ist Aufgabe der Erfindung, ein weiterhin mit den gängigen Methoden Streichen, Rollen und Spritzen applizierbares Flächenheizsystem zu finden, welches unter Beibehaltung des Vorteils niedriger Einbauhöhen auch die Realisierung in weniger Arbeitsschritten ermöglicht und zudem die Gefahr der Rissbildung und damit des Versagens der Heizung infolge Materialschwindung oder einer Rissbildung im beschichteten Untergrund weiter minimiert.

Diese Aufgabe wird durch die Merkmale des unabhängigen Patentanspruches 1 gelöst. Vorteilhafte Weiterbildungen der Erfindung sind Gegenstand untergeordneter Ansprüche.

Überraschenderweise wurde festgestellt, dass durch die Zugabe geringster Quantitäten kurzer elektrisch leitender Fasern zu in üblicher Weise mittels Graphit und/oder Ruß leitfähig eingestellten Kunstharzformulierungen eine signifikante Verbesserung der Leitfähigkeit dieser Systemkomponente erreicht werden kann, ohne - und auch dies ist von erheblichem Interesse - die Verarbeitungseigenschaften des Materials negativ zu beeinflussen. Auf derartige Weise ist eine Reduzierung des spezifischen Widerstandes des gehärteten Beschichtungsmaterials um mehr als 80% möglich, was erlaubt gewünschte Flächenheizleistungen nun auch mit deutlich geringeren Schichtdicken und damit mit einer praxisgerechteren, reduzierten Anzahl an Verarbeitungsschritten und dem damit verbundenen Zeit-und Arbeitsaufwand zu realisieren. Dieser äusserst positive Einfluss macht sich insbesondere bei größeren Flächen (>10m²) bemerkbar, da diese bei vorgegebenen Rahmenbedingungen (Flächenleistung, Spannungsquelle) mit den bisher erzielbaren Leitfähigkeiten naturgemäß deutlich höhere Schichtdicken erforderlich machten.

Die Leitfähigkeit der Heizschicht lässt sich auch signifikant verbessern, wenn anstatt der genannten kurzen Fasern ein leitfähiges Vlies oder Gewebe verwendet wird. Beide Maßnahmen tragen zudem bekanntermaßen im Sinnen einer Armierung zu einer Verminderung der Rissanfälligkeit der Beschichtung bei.

Entsprechend schlagen die Erfinder einen Aufbau einer Flächenheizung vor, welche zur einfachen und ökonomischen Herstellung einer heizbaren Beschichtung dient, im Wesentlichen bestehend aus:
- mindestens einer isolierten Heizschicht, aufgebaut aus einer Isolierschicht, in die eine Heizschicht eingebettet ist,
- randseitig angeordneten elektrischen Leitern zur Stromversorgung,
- wobei die Heizschicht aus einem Kunstharz besteht, dem zur signifikanten Verbesserung seiner Leitfähigkeit entweder geringe Mengen kurzer, elektrisch leitender Fasern beigegeben sind oder in welches bei der Anwendung vor Ort leitendes Gewebe oder Vlies eingebettet wird,
- und die elektrischen Leiter mit der elektrisch leitfähigen Komponente der Faser/Kunstharz-Kombination elektrisch verbunden sind.

Erfindungsgemäß wird also in üblicher Weise mit Graphit, Ruß, Metallpigmenten o.ä. leitfähig eingestelltem Kunstharz, zum Zweck der signifikanten Erhöhung der Leitfähigkeit sowie zu Armierungszwecken kurze elektrisch leitende Fasern beigegeben oder ein Laminat aus einem Gewebe oder Vlies und einem Kunstharz - wobei zwingend zumindest einer der beiden Bestandteile des Laminates elektrisch leitend sein muss - als stromführende Schicht im Sinne einer Widerstandsheizung, verwendet, wobei die stromführende Schicht zur flächigen Stromeinleitung in die Heizschicht mit elektrischen Leitern an eine, den Anforderungen angepasste, Spannungsquelle angeschlossen ist.

Bei den kurzen leitfähigen Fasern kann es sich um Kohlefasern oder um mit Metallen bedampfte organische oder anorganische Fasern handeln mit einer Länge von 0,5 bis 50mm, einer bevorzugten Länge von 1 bis 30mm und einer besonders bevorzugten Länge von 2 bis 6mm. Ihr Gehalt liegt vorteilhaft in Gewichtsteilen bei 0,01 bis 10%, vorzugsweise bei 0,05 bis 5% und besonders bevorzugt bei 0,07 bis 1,0%, jeweils bezogen auf die anwendungsfertige Mischung des Kunstharzes. Bei dem leitfähigen Gewebe oder Vlies kann es sich um eine Kohlefasermatte, eine mit Kohle- oder Metallfasern leitfähig gemachte Glasfaser- oder textile Struktur oder eine Struktur aus mit Metallen bedampften organischen oder anorganischen Fasern handeln. Es können auch Matten eingesetzt werden, in welchen sich leitende und isolierende Schichten sandwichartig abwechseln.

Als Vorrichtung zur Stromeinleitung in die Leitschicht kann eine massive, elektrisch hoch leitfähige Schiene, bestehend aus einem Metall oder NE-Metall (Nichteisenmetall) oder einer metallischen Legierung, zum Einsatz kommen. Vorzugsweise werden selbstklebende Kupferleiterbänder eingesetzt, die vor der Aufbringung des Laminats entsprechend der Flächengeometrie auf den isolierenden Untergrund aufgeklebt werden und den Vorteil einer geringen Einbauhöhe bieten.

Beim Einsatz eines Laminierharzes mit isolierenden Eigenschaften und Leitermatten wird die Kontaktierung zwischen Matte und Vorrichtung zur Stromeinleitung durch das Harz naturgemäß sehr stark beeinträchtigt. Sie muss mittels eines härtbaren, elektrisch hoch leitfähigen Klebstoffs oder Beschichtungsstoffes erfolgen. Dieser wird auf die beschriebene Vorrichtung aufgebracht und die Leitermatte im noch flüssigen Zustand des Klebstoffs beziehungsweise des Beschichtungsstoffes in diesen eingebettet.

Die stromführenden Teile der Heizschicht sollten entsprechend den gültigen Sicherheitsbestimmungen isoliert werden. Dies geschieht bevorzugt durch den Einsatz härtbarer Flüssigkunststoffsysteme mit isolierenden Eigenschaften z.B. auf Epoxidharzbasis. Besonders bevorzugt ist die Verwendung isolierender Flüssigkunststoffe bereits bei der Vorbehandlung des Untergrundes sowie bei der nachfolgenden Gestaltung der beheizbaren Fläche durch ein isolierendes Deckschichtsystem.

Als Kunstharz für die Heizschicht oder der Isolierschicht können dem Fachmann bekannte Kunstharze verwendet werden.
Insbesondere handelt es sich beim Kunstharz um Polyurethan-, (Meth)acrylat- oder Epoxidsysteme.

Polyurethan-Kunstharze lassen sich einkomponentig oder mehrkomponentig formulieren.
Einkomponentige Polyurethanharze enthalten im Wesentlichen Isocyantgruppen-aufweisende Polymere, welche mit Feuchtigkeit, wie sie beispielsweise aus der Luft in Form von Luftfeuchtigkeit, stammen, reagieren und zur Vernetzung Anlass führen. Diese Systeme reagieren zwar tendenziell eher langsam, obwohl sie bis zu einem gewissen Grad mit Katalysatoren noch beschleunigt werden können, weisen jedoch den grossen Vorteil auf, dass keine Reaktivkomponenten vor Ort bei der Applikation gemischt werden müssen und dadurch durch Mischfehler verursachte Applikationsfehler vermieden werden können.
Mehrkomponentige Polyurethanharze weisen mindestens zwei Komponenten auf. Eine dieser Komponente enthält Isocyanatgruppen aufweisende Substanzen in Form von
Polyisocyanat-Monomeren, -Oligomeren oder -Polymeren auf. Eine andere Komponente enthält mindestens eine Verbindung mit Isocyanat-reaktiven chemischen Gruppen auf, insbesondere Polyole, Polyamine und /oder Polymercaptane.
Allenfalls kann das mehrkomponentige Polyurethanharz noch eine dritte oder weitere Komponente aufweisen, welche beispielsweise ein Füller oder eine mineralisch abbindende Substanz oder einen Beschleuniger enthalten. Beispiele für bevorzugte derartige zweikomponentige Polyurethanharze sind solche, wie sie unter dem Namensreihe Sikafloor® von Sika Deutschland GmbH vertrieben werden. Besonders geeignete Beispiele für dreikomponentige Polyurethanharze sind die von Sika Deutschland als PurCem vertriebenen Produkte.

(Meth)acrylatharze sind vorzugsweise zweikomponentig. Typischerweise enthält hierbei die eine Komponente ein (Meth)acrylat, während die andere Komponente ein Radikalbildner, insbesondere in der Form eines organischen Peroxides oder Peresters, enthält. Derartige (Meth)acrylatharze weisen den grossen Vorteil der schnellen Aushärtung und frühen Begehbarkeit auf. (Meth)acrylate sind α,β-ungesättigte Verbindungen, deren Doppelbindungen durch den Einfluss von Radikalen miteinander reagieren und so zu Polymeren vernetzen. Als (Meth)acrylate sind insbesondere niedermolekulare (Meth)acrylate oder Oligomer-Meth)acrylate, wie beispielsweise (Meth)acrylsäureester von Polyetherpolyolen oder von Bisphenolen oder Umsetzungsprodukte von Epoxidharzen mit (Meth)acrylsäure einsetzbar. Als besonderes geeignetes (Meth)acrylat gilt Methylmethacrylat. Besonderes geeignete zweikomponentige (Meth)acrylatharze gelte die unter dem Handelsnamen Sikafloor® Pronto von Sika Deutschland GmbH vertriebenen Produkte.

Geeignete Epoxidharzsystem sind zwei- oder mehrkomponentig. Die erste Komponente enthält mindestens eine Epoxidharz auf Basis von Bisphenol-A- und/oder Bispheno-F-Diglycidylethern. Besonders bevorzugt sind sogenannte Epoxid-Flüssigharze. Üblicherweise enthält diese Komponente weiterhin einen sogenannten Epoxid-Reaktivverdünner und allenfalls einen Weichmacher oder Lösungsmittel. Die zweite Komponente enthält mindestens einen Härter für Epoxidharze, insbesondere ein Polyamin und/oder eine Polymercaptan. Allenfalls kann das mehrkomponentige Epoxidharzsystem noch eine dritte oder weitere Komponente aufweisen, welche beispielsweise ein Füller oder eine mineralisch abbindende Substanz oder einen Beschleuniger enthalten. Es kann durchaus vorteilhaft sein, wenn die Epoxydharzsysteme wässrig sind.
Beispiele für bevorzugte derartige zweikomponentige Epoxidharzsysteme sind solche, wie sie unter dem Namensreihe Sikafloor® von Sika Deutschland GmbH vertrieben werden. Besonders geeignete Beispiele für dreikomponentige Epoxidharzesysteme sind die von Sika Deutschland als EpoCem® vertriebenen Produkte.

Meist bevorzugt als Kunstharz für die Heizschicht oder der Isolierschicht sind zweikomponentige Epoxidharzsysteme

Für den hier beschriebenen Verwendungszweck ist es besonderes vorteilhaft, wenn das Kunstharz eine geringe Viskosität aufweist. Das Kunstharz sollte nach allfälliger Mischung der Komponenten bei der Applikationstemperatur zumindest fliessfähig sein. Typischerweise weist das Kunstharz unmittelbar nach Mischung eine Viskosität von weniger als 1 Pa.s auf.

Es ist dem Fachmann klar, dass die Kunstharze vorzugsweise zusätzlich zu den bereits erwähnten Bestandteilen noch Additive, welche insbesondere die Verlaufeigenschaften, die Oberflächenästhetik, positiv beeinflussen, enthalten können. Weitere Zusätze im Kunstharz sind dem Fachmann aus anderen Einsatzgebieten dieser Kunstharze bekannt und deshalb auch möglich.

Generell gilt für die erwähnten zwei- oder mehrkomponentigen Kunstharze, dass die einzelnen Komponenten für sich genommen in geeigneter, insbesondere dichter, Verpackung über längere Zeit lagerstabil sind und unmittelbar vor der Applikation miteinander gemischt werden, wodurch eine Vernetzungsreaktion und damit Aushärtung ausgelöst wird.

### Kurze Beschreibung der Zeichnungen

Im Folgenden wird die Erfindung anhand der Figuren näher beschrieben, wobei nur die zum Verständnis der Erfindung notwendigen Merkmale dargestellt sind. Es zeigen im Einzelnen:
- FIG 1:: Schnitt durch einen beispielhaften Aufbau einer Flächenheizung;
- FIG 2:: Aufsicht auf das Flächenheizsystem aus Figur 1;
- FIG 3:: Spezifischer Widerstand in Abhängigkeit von zugegebener Fasermenge.

### Wege zur Ausführung der Erfindung

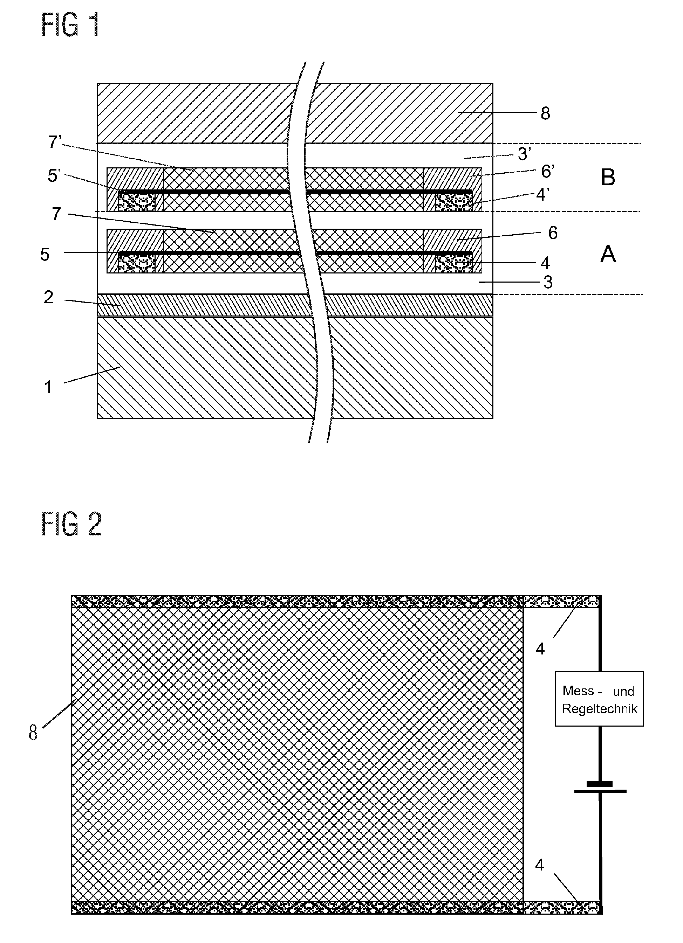

Die **Figur 1** zeigt einen Schnitt durch einen beispielhaften Aufbau einer erfindungsgemäßen Flächenheizung und wird nachfolgend beschrieben. Obwohl hier ein ebener Aufbau gezeigt ist, eignet sich der erfindungsgemäße Aufbau jedoch insbesondere auch für eine Verlegung auf unregelmäßigen und gekrümmten Oberflächengeometrien.

Das erfindungsgemäß eingesetzte System zur Herstellung einer heizbaren Flächenbeschichtung A auf bereits vorhandenen Untergründen 1 (z.B. Betonboden oder Wand) und gegebenenfalls 2 (Primerschicht zum Ausgleich von Unebenheiten), bedient sich bekannter Verarbeitungstechniken und Systemkomponenten mit bekannten Eigenschaften, kombiniert diese jedoch in neuartiger Weise, so dass eine elektrische Widerstandsheizung mit geringen Einbauhöhen (<2mm) einfach und ökonomisch sowohl während des Neubaus, als auch nachträglich bereitgestellt werden kann.

Vor dem Aufbringen dieser Schichtstruktur wird das Substrat 1 entsprechend den Erfordernissen gegebenenfalls z.B. mit einem Voranstrich 2 vorbehandelt.
Als stromführende Komponente 5 können leitfähige Gewebe oder Vliese aus Kohlefaser, wie sie z.B. in der Bauwerksverstärkung Verwendung finden, mit Kohle- oder Metallfasern leitfähig gemachte Glasfaser- oder textile Gewebe oder Vliese, aber auch Gewebe oder Vliese aus mit Metallen bedampften organischen oder anorganischen Fasern, zum Einsatz kommen. Solche Leitermatten können als Kunststofflaminat auf einen isolierenden Untergrund aufgebracht werden. Als Flüssigkunststoff 7 eignen sich insbesondere konventionelle Laminierharze, z.B. auf der Basis von Epoxidharzen. Auch Leitermatten mit sandwichartiger Struktur, in welchen sich elektrisch leitende Gewebe- oder Vlieslagen mit isolierenden abwechseln, können verwendet werden.

Auch der Einsatz härtbarer elektrisch leitfähiger Flüssigkunststoffe auf der Basis wässriger, lösemittelhaltiger oder lösemittelfreier Kunstharzsysteme als Leit- und Heizschicht ist möglich. Damit ist die Verklebung 6 der Leiterbahnen 4 identisch mit der Schicht 7. Die Einstellung der Leitfähigkeit kann üblicherweise durch den Zusatz von Ruß, Graphit, metallischen Pigmenten oder Mischungen hieraus erfolgen. Da diese Kunststoffe infolge ihres hohen Füllgrades naturgemäß über keine große Flexibilität verfügen und damit eine gewisse Rissanfälligkeit aufweisen, eine Rissbildung in der Schicht jedoch zum teilweisen oder gar vollständigen Versagen der Heizung führen kann, wird idealerweise im Sinne einer Armierung mit einer Kombination mit einer oder mehrerer der oben beschriebenen kurzen leitfähigen Fasern und einem in üblicher Weise leitfähig eingestellten Flüssigkunststoff oder einem Laminat aus einer der ebenfalls bereits beschriebenen Leitermatten und einem Flüssigkunststoff als Laminierharz gearbeitet. Um eine gleichmäßige Aufheizung der Fläche zu gewährleisten, hat ein gleichmäßiger Stromeintrag entlang zweier gegenüberliegender Seiten einer Fläche zu erfolgen. Hierfür eignen sich massive Schienen oder Bänder 4 aus Eisen- oder NE-Metallen. Von besonderer Bedeutung ist eine gut leitende Verbindung zwischen diesen metallischen Komponenten und der Leitermatte. Bei der Verwendung leitfähiger Gewebe oder Vliese sind punktuelle mechanische Kontaktierungen ungünstig, da sie ebenso wie Verbindungen mit einem hohen Übergangswiderstand bekanntermaßen zu lokalen Überhitzungen bis hin zur Funkenbildung führen. Eine gleichmäßige Kontaktierung lässt sich realisieren durch eine Verklebung der Leitermatte mit der Schiene mittels eines elektrisch hoch leitfähigen Klebstoffs oder Beschichtungsstoffes 6.

Eine zweite Leiterschicht B, die durch eine isolierende Kunstharzschicht 3 von der ersten Leiterschicht getrennt ist und in analoger Weise elektrisch kontaktiert wird, dient üblicherweise als Schutzleiter. Bei Verwendung von oben bereits erwähnten Sandwichmatten in Kombination mit einem isolierenden Laminierharz kann eine der vorhandenen Leitschichten als Schutzleiter verwendet werden, was den Einbau der Flächenheizung sehr viel effizienter gestaltet.

Die stromführenden Strukturen werden durch ein elektrisch nicht leitfähiges Material 3 der Leiterschicht A von den übrigen Systemkomponenten isoliert. Bevorzugt werden hier härtbare Flüssigkunststoffsysteme mit den jeweils gültigen Sicherheitsbestimmungen entsprechenden isolierenden Eigenschaften eingesetzt.

In der gezeigten Schnittdarstellung ist der Aufbau der Schutzschicht B analog zum Aufbau der Heizschicht ausgeführt. Entsprechend sind äquivalente Schichten hier mit den gestrichenen Bezugszeichen 3' bis 7' versehen.

Als Abschluss für den heizbaren Beschichtungsaufbau kann jedes den in technischer und optischer Hinsicht gestellten Anforderungen gerecht werdende Beschichtungsmaterial oder -system 8 dienen.

Je nach Auslegung bezüglich Flächengeometrie, Leitfähigkeit des Laminierharzes und der Leitermatte sowie der angestrebten Flächenleistung, ist der Betrieb der Heizung mit Niederspannung, z.B. 12 V, oder konventioneller Netzspannung, z.B. 110 V oder 220 V, möglich. Vom Umweltgesichtspunkt aus betrachtet ist die Kombination der Flächenheizung mit einer Paneel- oder folienbasierten Photovoltaik-Anlage ideal.

In der **Figur 2** ist das Flächenheizungssystem von Figur 1 in einer Aufsicht schematisch dargestellt.

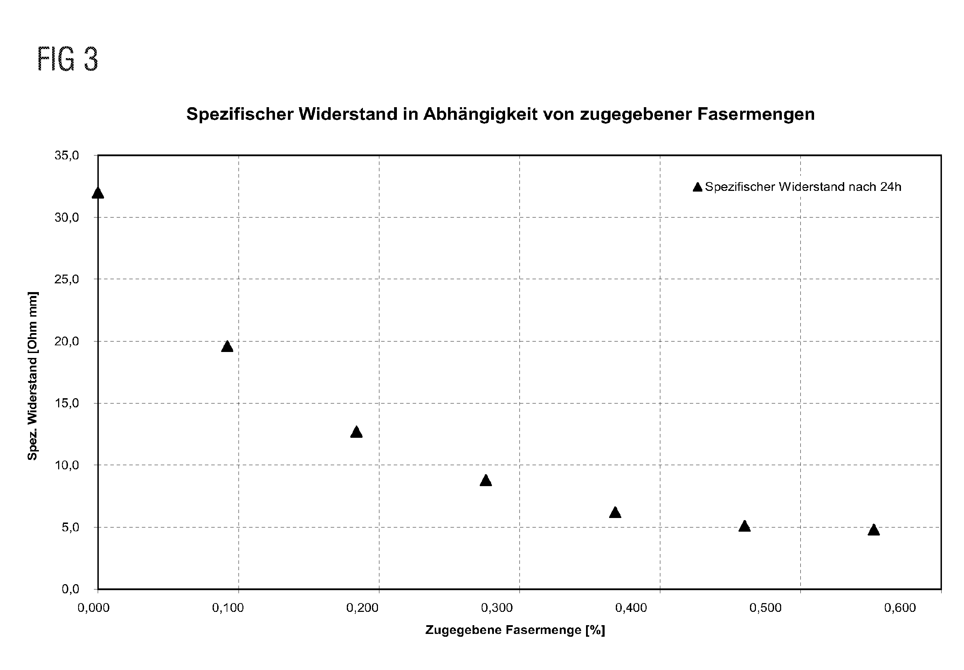

Ergänzend ist in der **Figur 3** noch der spezifische Widerstand eines erfindungsgemäß ausgestalteten Aufbaues einer Flächenheizung in Abhängigkeit der zugegebenen Fasermenge in Gewichtsprozent nach einer Wartezeit von 24 Stunden dargestellt. Wie aus dem dargestellten Widerstandsverlauf zu entnehmen ist, wird in dem hier gezeigten Beispiel bereits bei etwa 0,4% Faseranteil eine Sättigung bei einem sehr niedrigen spezifischen Widerstand von etwa 5 Ωmm erreicht. Gegenüber dem Stand der Technik entspricht dies einem wesentlich geringeren Anteil leitender Bestandteile, wodurch die Festigkeit der Anordnung positiv beeinflusst wird und auch relativ dicke Schichten in einem Arbeitsgang auftragbar sind.

Es versteht sich, dass die vorstehend genannten Merkmale der Erfindung nicht nur in der jeweils angegebenen Kombination, sondern auch in anderen Kombinationen oder in Alleinstellung verwendbar sind, ohne den Rahmen der Erfindung zu verlassen.

### Bezugszeichenliste

- 1: Untergrund / Substrat
- 2: Voranstrich
- 3, 3': isolierende Kunstharzschicht
- 4, 4': massiver elektrischer Leiter
- 5, 5': Kohlefasergewebe
- 6, 6': elektrisch leitender Klebstoff
- 7, 7': Flüssigkunststoff
- 8: Beschichtungsmaterial

- A: Heizschicht
- B: leitende Schutzschicht

## Patentansprüche

1. Aufbau einer Flächenheizung aufweisend:
mindestens eine isolierte Heizschicht (A) bestehend aus einer Isolierschicht (3), in die eine Heizschicht (4, 5, 6, 7) eingebettet ist,
randseitig angeordnete elektrische Leiter (4) zur Stromversorgung,
wobei die Heizschicht aus einem Kunstharz (7) besteht,
dem zur signifikanten Verbesserung seiner Leitfähigkeit entweder geringe Mengen kurzer,
elektrisch leitender Fasern beigegeben sind oder in welches bei der Anwendung vorort leitendes Gewebe oder
Vlies (5) eingebettet wird,
und die elektrischen Leiter (4) mit der elektrisch leitfähigen Komponente (5 bzw. 7) der Faser/Kunstharz-Kombination elektrisch verbunden sind.

2. Aufbau einer Flächenheizung gemäß dem voranstehenden Patentanspruch 1,
**dadurch gekennzeichnet, dass** es sich bei dem Kunstharz um ein in üblicher Weise elektrisch leitfähig eingestelltes Kunstharz handelt, dem zusätzlich kurze, elektrisch leitfähige Fasern beigesetzt sind.

3. Aufbau einer Flächenheizung gemäß einem der voranstehenden Patentansprüche 1 bis 2,
**dadurch gekennzeichnet, dass** es sich bei den Fasern um Kohlefasern und/oder um metallisch bedampfte organische oder anorganische Fasern handelt.

4. Aufbau einer Flächenheizung gemäß einem der voranstehenden Patentansprüche 1 bis 3,
**dadurch gekennzeichnet, dass** der Gehalt an zugesetzter Kurzfaser im Bereich von 0,01 bis 10%, bevorzugt 0,05 bis 5%, besonders bevorzugt 0,08 bis 1%, bezogen auf die anwendungsfertige Mischung liegt.

5. Aufbau einer Flächenheizung gemäß einem der voranstehenden Patentansprüche 2 bis 4,
**dadurch gekennzeichnet, dass** die Fasern eine Länge von 0,5mm bis 50mm, bevorzugt 1mm bis 30mm, besonders bevorzugt 2mm bis 6mm, aufweisen.

6. Aufbau einer Flächenheizung gemäß dem voranstehenden Patentanspruch 1,
**dadurch gekennzeichnet, dass** die Faser/Kunstharz-Kombination (7) ein geschichtetes Laminat aus einem Gewebe oder Vlies (5) einerseits und einem Kunstharz (7) andererseits aufweist.

7. Aufbau einer Flächenheizung gemäß einem der voranstehenden Patentansprüche 1 oder 6,
**dadurch gekennzeichnet, dass** die elektrischen Leiter (4) durch einen elektrisch hoch leitenden Klebstoff (6) mit dem leitenden Bestandteil des Laminates (5) elektrisch verbunden sind.

8. Aufbau einer Flächenheizung gemäß einem der voranstehenden Patentansprüche 1 bis 7,
**dadurch gekennzeichnet, dass** die Isolierschicht (3) aus Kunstharz hergestellt ist.

9. Aufbau einer Flächenheizung gemäß einem der voranstehenden Patentansprüche 1 bis 8,
**dadurch gekennzeichnet, dass** das Kunstharz auf Epoxidharzbasis hergestellt ist.

10. Aufbau einer Flächenheizung gemäß einem der voranstehenden Patentansprüche 1, 6 oder 7,
**dadurch gekennzeichnet, dass** das Gewebe oder Vlies (5) aus Kohlefaser und/oder aus Metallfasern und/oder aus metallisch bedampften organischen oder anorganischen Fasern hergestellt ist.

11. Aufbau einer Flächenheizung gemäß einem der voranstehenden Patentansprüche 1 oder 6 bis 10,
**dadurch gekennzeichnet, dass** der hoch leitende Klebstoff (6) eine Mischung aus Kunstharz und leitenden Bestandteilen ist.

12. Aufbau einer Flächenheizung gemäß dem voranstehenden Patentanspruch 11,
**dadurch gekennzeichnet, dass** als leitende Bestandteile mindestens eines der Elemente der nachfolgenden Liste verwendet wird: Ruß, Graphit, Metallpigment, Kohlefaser, Metallfaser.

13. Aufbau einer Flächenheizung gemäß einem der voranstehenden Patentansprüche 1 bis 12,
**dadurch gekennzeichnet, dass** der Leiter (4) ein metallischer Leiter, insbesondere ein Kupferband, ist.

14. Aufbau einer Flächenheizung gemäß einem der voranstehenden Patentansprüche 1 bis 13,
**dadurch gekennzeichnet, dass** über der isolierten Heizschicht eine leitende Schutzschicht (B) angeordnet ist, die mit einem Schutzleiter verbunden ist.

15. Aufbau einer Flächenheizung gemäß dem voranstehenden Patentanspruch 14,
**dadurch gekennzeichnet, dass** die leitende Schutzschicht (B) besteht aus:
einer Isolierschicht (3'), in die eine leitende Schicht (4', 5', 6' 7') eingebettet ist,
mindestens einem randseitig angeordneten elektrischen Leiter (4') mit Anschluss an einen FI-Schalter,
wobei die Schutzschicht eine Kombination eines Kunstharzes (7') mit Fasern oder ein geschichtetes Laminat aus einem Gewebe oder Vlies (5') einerseits und einem Kunstharz (7') andererseits aufweist und
zumindest einer der beiden Bestandteile elektrisch leitend ausgebildet ist,
und die elektrischen Leiter (4') beim Einsatz eines nicht leitenden Kunstharzes (7') in Kombination mit elektrisch leitendem Gewebe oder Vlies (5') mit einem elektrisch leitenden Klebstoff (6') mit dem leitenden Bestandteil des Laminats (5', 7') verbunden sind.

16. Aufbau einer Flächenheizung gemäß dem voranstehenden Patentanspruch 15,
**dadurch gekennzeichnet, dass** die leitende Schutzschicht (B) die Merkmale der Ansprüche 2 bis 13 aufweist.
